Europäisches Patentamt

European Patent Office

Office européen des brevets

(11) Veröffentlichungsnummer: **0 422 569 A1**

# (12) EUROPÄISCHE PATENTANMELDUNG

(21) Anmeldenummer: **90119282.3**

(22) Anmeldetag: **08.10.90**

(51) Int. Cl.5: **A23K 3/04, A23K 1/22, A23K 1/02**

(30) Priorität: **13.10.89 DE 3934264**

(43) Veröffentlichungstag der Anmeldung:
**17.04.91 Patentblatt 91/16**

(84) Benannte Vertragsstaaten:
**DE NL**

(71) Anmelder: **Dornow, Karl Dietrich**
**Kaiser-Friedrich-Ring 96**
**W-4000 Düsseldorf 11(DE)**

(72) Erfinder: **von zur Gathen, Horst**
**Nösenberg 2**
**W-4020 Mettmann(DE)**

(74) Vertreter: **Bergen, Klaus, Dipl.-Ing. et al**
**Patentanwälte Dr.-Ing. Reimar König**
**Dipl.-Ing. Klaus Bergen Wilhelm-Tell-Strasse**
**14 Postfach 260162**
**W-4000 Düsseldorf 1(DE)**

(54) **Verfahren zum Konservieren von Schalenresten.**

(57) Bei einem Verfahren zum Konservieren von Schalenresten, insbesondere Kartoffelschalen, wird den Schalenresten Harnstoff und Melasse als Konservierungsmittel beigemischt.

EP 0 422 569 A1

## VERFAHREN ZUM KONSERVIEREN VON SCHALENRESTEN

Die Erfindung betrifft ein Verfahren zum Konservieren von Schalenresten, insbesondere Kartoffelschalen, die für die Verfütterung an Tiere geeignete, ernährungsphysiologisch wertvolle Bestandteile enthalten. Dies trifft beispielsweise außer bei Kartoffeln für die Schalenreste von Roter Beete und Karotten zu.

Wegen ihres hohen Wassergehaltes, der bei Kartoffeln ca. 80 % beträgt, unterliegen die Schalenreste derartiger Erdfrüchte einem raschen mikrobiellen Verderb. Obwohl sich der Wassergehalt durch starkes Pressen der Schalenreste senken läßt, wobei dann allerdings eine hohe Belastung des den Wasserwerken über die Kanalisation zur Reinigung zugeführten Abwassers nicht zu verhindern ist, ist der Wassergehalt sowohl bei der alleinigen Verfütterung der Schalenreste als auch in Abmischung mit anderen Futtermitteln dann noch so hoch, daß ein Wachstum von Mikroorganismen noch möglich ist. In Mastbetrieben dürfen Qualitätsnachteile des Futtermittels allerdings nicht hingenommen werden, da die Tiere ansonsten gesundheitlich gefährdet werden; zu verfütternde Schalenreste dürfen daher nicht schon in das Fäulnisstadium eingetreten sein. Zwar ist es möglich, die Schalenreste sofort nach ihrem Anfall an die Tierhalter weiterzugeben und unmittelbar an Tiere zu verfüttern, jedoch läßt sich eine solch unmittelbare Verwertung nur dort verwirklichen, wo Tierhalter und die die Schalenreste produzierende, Erdfrüchte verarbeitende Produktionsstätte nicht zu weit voneinander entfernt sind.

Der Erfindung liegt die Aufgabe zugrunde, ein Verfahren zu schaffen, mit dem sich zur Verfütterung an Tiere geeignete Schalenreste von z.B. Roter Beete und Karotten, insbesondere von Kartoffeln, haltbar machen lassen.

Diese Aufgabe wird erfindungsgemäß dadurch gelöst, daß den Schalenresten Harnstoff und Melasse als Konservierungsmittel beigemischt wird. Überraschenderweise hat sich herausgestellt, daß sich durch Zusatz dieser beiden Konservierungsmittel die Schalenreste mehrere Monate lang mikrobiologisch und bakteriell keimfrei halten lassen und sich die Tiere an Futtermittel mit einem Harnstoff-Zusatz gewöhnen. Wie sich aufgrund von Versuchen ergeben hat, konnten mit lediglich Harnstoff bei Kartoffelschalen keine ausreichenden Haltbarkeiten erzielt werden. Der angestrebte Erfolg stellte sich - unerwartet - erst ein, nachdem als weiteres Konservierungsmittel Melasse zugegeben worden ist. Als weiterer Vorteil hat sich dann folgendes herausgestellt: Die Melasse unterbindet bzw. begrenzt den Ammoniakgeruch des Harnstoffs weitestgehend, macht die Schalenreste schmackhafter und ist außerdem ein hoher Energieträger, so daß durch die Konservierung der Schalenreste mit Harnstoff und Melasse das Futtermittel höherwertiger wird. Melasse ist ein preiswertes, in der Zuckerindustrie als Nebenerzeugnis anfallendes Zugabemittel und entsteht bei der Verarbeitung pflanzlicher Säfte, aus denen durch Eindampfen und Auskristallisieren Zucker gewonnen wird, und zwar als dunkelbraune, hochviskose, sirupöse Flüssigkeit, aus der wegen hohen Gehal tes an Nichtzuckerstoffen kein Zucker mehr auskristallisieren kann, und ist der letzte Ablauf bei der Gewinnung des Zuckers durch mehrmalige Kristallisation. Der Hauptenergieträger sind allerdings nach wie vor die Schalenreste, insbesondere Kartoffelschalen, die intensiv mit dem Harnstoff vermischt werden müssen, denn an jedem Schalenstück muß Harnstoff haften.

Wiederkäuer setzen Harnstoff in tierisches Eiweiß um; sie können einen bevorzugten Harnstoff-Anteil von bis zu 3 Gew. % der Schalenreste ohne weiteres umwandeln. Der Melasse-Anteil sollte vorzugsweise höchstens bis zu 30 Gew. % der Schalenreste betragen, um Verdauungsprobleme bei den Tieren zu verhindern. Da insbesondere bei Milchkühen der Melasse-Anteil nicht über 10 Gew. % liegen sollte, empfiehlt es sich, in der Milchhaltung die mit Harnstoff und Melasse konservierten Schalenreste vor allem zur Zufütterung, bis 40 % des Gesamt-Futters, zu verwenden. Damit wird berücksichtigt, daß Milchkühe zehn Jahre und länger gehalten werden, und sich bei einer Alleinfütterung ansonsten ein Defizit an Mineralien ergäbe. Außerordentlich gute Ergebnisse konnten bei einer Zusammensetzung mit 0,8 Gew. % Harnstoff und 12 Gew. % Melasse erzielt werden. Das genaue Mischverhältnis hängt im Einzelfall maßgeblich auch vom jeweiligen Stärkegehalt der Kartoffeln bzw. der Schalenreste ab.

Versuche haben gezeigt, daß bei einem Melasseanteil von etwa 10 Gew. % mit einem Harnstoffanteil von 2,5 Gew. % Kartoffelschalenreste mehrere Monate haltbar gemacht werden konnten; selbst bei einem Harnstoff-Anteil von lediglich 1 Gew. % und andauernder Sonneneinwirkung auf das Harnstoff-Schalenreste-Gemisch, war das Futtermittel nach sechs Tagen noch einwandfrei; die Schalen fingen nicht an zu gären, und es bildete sich keine Säure. Auf diese Weise haltbar gemachte Schalenreste lassen sich somit ohne Qualitätsverluste auch über weite Strecken bei entsprechend langer Transportdauer befördern. Es konnte festgestellt werden, daß auf grund der Erfindung nicht nur die Vermehrung von Bakterien verhindert, sondern vorhandene Bakterien sogar abgetötet werden;

Schimmel- und Pilzkulturen ist durch die Maßnahmen nach der Erfindung der Nährboden entzogen.

Es empfiehlt sich, daß den Schalenresten ein strukturgebender Zusatz zugegeben wird, wie Haferschalen, Malz und Mais. Bei Haferschalen als Zugabe hat sich ein Anteil von 20 bis 40 Gew. % der Schalenreste, vorzugsweise 30 Gew. % als zur Erhöhung des Rauhfasergehalts ausreichend herausgestellt. Das erfindungsgemäß konservierte Futtermittel besitzt dann eine die Verdauung fördernde Struktur und macht es damit z. B. für Bullen auch als Alleinfutter geeignet.

## Ansprüche

1. Verfahren zur Konservierung von Schalenresten, insbesondere Kartoffelschalen, dadurch gekennzeichnet , daß den Schalenresten Harnstoff und Melasse als Konservierungsmittel beigemischt wird.

2. Verfahren nach Anspruch 1, dadurch gekennzeichnet , daß der Harnstoffanteil bis zu 3 Gew. % der Schalenreste beträgt.

3. Verfahren nach Anspruch 1 oder 2, dadurch gekennzeichnet , daß der Melasse-Anteil bis zu 30 Gew. % der Schalenreste beträgt.

4. Verfahren nach einem oder mehreren der Ansprüche 1 bis 3, dadurch gekennzeichnet , daß den Schalenresten ein strukturgebender Zusatz, wie Haferschalen, Malz und/oder Mais zugegeben wird.

5. Verfahren nach Anspruch 4, dadurch gekennzeichnet , daß zusätzlich Haferschalen mit einem Anteil von 20 bis 40 Gew. % der Schalenreste zugegeben werden.

Europäisches
Patentamt

**EUROPÄISCHER
RECHERCHENBERICHT**

Nummer der Anmeldung

**EP 90 11 9282**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | COMMONWEALTH AGRICULTURAL BUREAUX, 0G051-00572, HERBAGE ABS; E.O. OTCHERE et al.: "Response of sheep to rice straw of cassava peels fortified with urea and molasses as supplemental feed to grazing", & GHANA JOURNAL OF AGRICULTURAL SCIENCE, vol. 10, no. 1, 1977, pages 61-66 * Abstract * | 1-3 | A 23 K 3/04 A 23 K 1/22 A 23 K 1/02 |
| | — — — | | |
| X | COMMONWEALTH AGRICULTURAL BUREAUX, 1C052-00719 SUGAR INDUSTRY ABS; A.M. NOUR et al.: "Evaluation of silage from some agro-industrial by-products in vitro", & ALEXANDRIA JOURNAL OF AGRICULTURAL RESE-ARCH, vol. 32, no. 3, 1987, pages 49-61 * Abstract * | 1-3 | |
| | — — — | | |
| A | DE-A-1 492 877  (R. GAMPER) * Patentansprüche 1,6; Seite 3, Zeile 5 - Seite 4, Zeile 1 * | 1 | |
| | — — — | | |
| A | DE-A-1 902 767  (W. GÄBLER) * Seite 4, Absatz 3; Seite 5, Absatz 2 * | 1,3 | |
| | — — — | | RECHERCHIERTE SACHGEBIETE (Int. Cl.5) |
| A | DE-A-1 815 095   (FLACHRÖSTE BERCHING) * Patentansprüche 1,2 * | 1,2 | A 23 K |
| | — — — | | |
| A | GB-A-1 235 91   (HENRY ASTON DOWDING) * Patentansprüche 1,2 * | 4 | |
| | — — — | | |
| A | DE-A-2 234 819   (ALLIED CHEMICAL CORP.) * Patentanspruch 1; Seite 10, Zeile 1 - Seite 11, 1. Hälfte; Beispiele 15,16 * | 1 | |
| | — — — — — | | |

Der vorliegende Recherchenbericht wurde für alle Patentansprüche erstellt

| Recherchenort | Abschlußdatum der Recherche | Prüfer |
|---|---|---|
| Den Haag | 29 November 90 | DEKEIREL M.J. |